# DEMANDE DE BREVET EUROPEEN

(11) **EP 4 464 659 A1**
(43) Date de publication de la demande: **20.11.2024**
(21) Numéro de dépôt: 24175330.0
(22) Date de dépôt: 13.05.2024
(51) Int. Cl.: C01B 3/08, B01J 7/02, B01J 16/00, B01J 19/02

(54) **INSTALLATION POUR LA PRODUCTION DE H2**

(30) Priorité: 12.05.2023 FR 2304739
(71) Demandeur: NOVACIUM, 69360 Solaize (FR)
(72) Inventeur: KRAIEM, Jed, 69008 LYON (FR); NICHIPORUK, Oleksiy, 69780 MIONS (FR); DEGOULANGE, Julien, 69230 SAINT GENIS LAVAL (FR)
(74) Mandataire: Be IP

(57) **Abrégé**

La présente invention concerne une installation pour la production de dihydrogène comprenant :
- une enceinte réactionnelle (1) destinée à contenir un matériau oxydable,
- un système d'alimentation (2) en solution alcaline raccordé fluidiquement à l'enceinte réactionnelle (1),
- un système d'approvisionnement (3) en eau pure (31) raccordé fluidiquement à l'enceinte réactionnelle (1),
- un système de collecte (4) du dihydrogène en aval de l'enceinte réactionnel (1), le système de collecte (4) étant raccordé fluidiquement :
∘ à l'enceinte réactionnelle (1),
∘ au système d'approvisionnement (3), et à
∘ un récipient de stockage (5) configuré pour stocker le dihydrogène produit à une haute pression désirée.

## Description

### DOMAINE DE L'INVENTION

La présente invention concerne le domaine technique général de la production de dihydrogène H₂, plus communément appelé « *hydrogène ».*

Notamment, l'invention est relative à une installation (et un procédé associé) de production d'hydrogène sous pression par une réaction chimique, en particulier par décomposition de l'eau sous l'action de métaux ou métalloïdes.

### ARRIERE PLAN DE L'INVENTION

### 1. Généralités

L'hydrogène peut être utilisé dans diverses applications en raison de son fort potentiel énergétique. Il peut être converti en électricité, en chaleur ou en force motrice selon l'usage final.

N'existant pas à l'état naturel, il doit être fabriqué à partir d'une source d'énergie primaire, puis transporté, stocké et distribué vers l'utilisateur.

### 2. Procédés existants de production d'hydrogène

Aujourd'hui, l'hydrogène peut être produit à partir d'hydrocarbures par vaporeformage du gaz naturel ou par gazéification de résidus pétroliers ou de charbon. Un inconvénient des procédés de production d'hydrogène par vaporeformage est qu'ils font intervenir des ressources fossiles.

D'autres procédés de production d'hydrogène, par exemple par électrolyse ou par photocatalyse ont déjà été proposés. Toutefois, un inconvénient de ces procédés est que l'hydrogène est produit sous une pression relativement basse - typiquement comprise entre 1 et 30 bars, de sorte qu'une étape de compression de l'hydrogène est nécessaire pour permettre son chargement dans des réservoirs de stockage. Par ailleurs ces procédés, et en particulier l'électrolyse sont très énergivores.

Enfin, on connaît également des procédés de production d'hydrogène utilisant des métaux décomposant l'eau sous l'action d'un acide ou d'une base. Notamment, le document US 2003/0143155 divulgue un procédé de production d'hydrogène par corrosion d'aluminium dans de l'eau. Ce procédé comprend les étapes consistant à :
- introduire une solution aqueuse contenant de l'hydroxyde de sodium dans un récipient de réaction,
- introduire des particules d'aluminium dans la solution aqueuse,
- maintenir les particules d'aluminium à la surface de la solution aqueuse,
- faire réagir les particules d'aluminium avec l'eau de la solution aqueuse pour produire de l'hydrogène,
- maintenir sensiblement constante la quantité d'hydroxyde sodium dans le récipient de réaction, et
- obtenir un précipité d'alumine dans le fond du récipient de réaction.

Un inconvénient du procédé selon US 2003/0143155 concerne son coût de production important.

En effet, lorsqu'une réaction entre de l'aluminium et de l'eau est initiée, une couche d'alumine imperméable se forme à la surface de l'aluminium, et le protège de la corrosion. Ceci a pour effet de ralentir, voire d'arrêter la réaction de corrosion de l'aluminium. Il est donc nécessaire de dissoudre cette couche d'alumine à l'aide d'une solution aqueuse présentant un pH élevé, c'est-à-dire une concentration en alcali élevée.

Ainsi, pour mettre en oeuvre le procédé décrit dans le document US 2003/0143155, la concentration en hydroxyde de sodium dans la solution aqueuse doit être élevée. Dès lors, la précipitation d'alumine dans le fond du récipient de réaction mentionnée dans US 2003/0143155, et la régénération d'hydroxyde de sodium qui s'en suit sont limitées. Il en résulte une consommation d'hydroxyde de sodium lors de la réaction de corrosion de l'aluminium, et donc la nécessité d'ajouter régulièrement de l'hydroxyde de sodium dans le récipient de réaction pour maintenir la réaction de corrosion de l'aluminium, ce qui augmente le coût de production de l'hydrogène à partir du procédé selon US 2003/0143155.

### 3. But de l'invention

Un but de la présente invention est de proposer une installation (et son procédé associé) de production d'hydrogène permettant de pallier au moins l'un des inconvénients précités.

Notamment un but de la présente invention est de proposer une installation configurée pour produire de l'hydrogène sous pression, le traiter, et effectuer le remplissage d'un récipient de stockage (tel qu'une bouteille) sous pression.

Un autre but de la présente invention est de proposer une installation de production d'hydrogène permettant de faciliter la gestion de sous-produits de réaction.

Un autre but de la présente invention est de fournir une installation et un procédé de production d'hydrogène permettant d'obtenir des coûts de production d'hydrogène moins élevés que ceux des installations et procédés de l'art antérieur.

### BREVE DESCRIPTION DE L'INVENTION

A cet effet, l'invention propose une installation pour la production de dihydrogène comprenant :
- une enceinte réactionnelle destinée à contenir un matériau oxydable,
- un système d'alimentation en solution alcaline raccordé fluidiquement à l'enceinte réactionnelle,
- un système d'approvisionnement en eau pure raccordé fluidiquement à l'enceinte réactionnelle,
- un système de collecte du dihydrogène en aval de l'enceinte réactionnel, le système de collecte étant raccordé fluidiquement :
   ∘ d'une part à l'enceinte réactionnelle, et
   ∘ d'autre part au système d'approvisionnement,

   et comprenant une borne pour connecter un récipient de stockage à l'installation, ledit récipient étant configuré pour stocker le dihydrogène produit à une haute pression désirée supérieure ou égale à 60 bars, préférentiellement supérieure à 150 bars, encore plus préférentiellement supérieure à 250 bars, notamment de l'ordre de 350bars,
   remarquable en ce que l'enceinte réactionnelle comprend :
      - une chambre de réaction dans laquelle une réaction de corrosion du matériau oxydable par la solution alcaline est réalisée, ladite réaction produisant un gaz contenant le dihydrogène, et un fluide réactionnel composé d'un mélange de solution alcaline et de matériau oxydé,
      - une chambre de décantation dans laquelle une réaction de précipitation du matériau oxydé contenu dans le fluide réactionnel est réalisée, et
      - une unité de brassage raccordée fluidiquement à la chambre de réaction et à la chambre de décantation pour assurer la circulation du fluide réactionnel entre la chambre de réaction et la chambre de décantation, la vitesse de circulation du fluide réactionnel dans la chambre de réaction étant supérieure à la vitesse de circulation du fluide réactionnel dans la chambre de décantation.

Le fait que l'enceinte réactionnelle comporte :
- deux chambres distinctes, à savoir :
   ∘ une première chambre - dite « *chambre de réaction* » - dans laquelle la réaction de corrosion du matériau oxydable (par exemple l'aluminium) est réalisée, et
   ∘ une deuxième chambre - dite « *chambre de décantation* » - dans laquelle la réaction de précipitation du matériau oxydé (par exemple aluminate de sodium) est réalisée, et
- une unité de brassage pour assurer la circulation du fluide réactionnel à travers les première et deuxième chambres, la vitesse de circulation du fluide réactionnel dans la première chambre (« *chambre de réaction* ») étant supérieure à la vitesse de circulation du fluide réactionnel dans la deuxième chambre (« *chambre de décantation* »),
permet d'une part d'attaquer le matériau oxydable avec une solution aqueuse alcaline présentant un pH élevé assurant l'initiation et le maintien de la réaction de corrosion du matériau oxydable avec l'eau contenue dans la solution aqueuse alcaline, et d'autre part d'assurer une précipitation du matériau oxydé majoritairement dans la chambre de décantation, c'est-à- dire dans un compartiment différent de celui dans lequel a lieu la réaction de corrosion.

Cet agencement permet d'assurer une précipitation (par exemple sous forme d'alumine) de la totalité du matériau oxydé produit (par exemple aluminate de sodium), et donc une régénération de la solution aqueuse alcaline avant son passage à travers la chambre de réaction.

Le dispositif selon l'invention permet ainsi la production d'hydrogène sans qu'il soit nécessaire d'ajouter d'alcali (tel que de l'hydroxyde de sodium (soude), de l'hydroxyde de potassium (potasse), de l'hydroxyde de lithium, de l'hydroxyde d'ammonium (ammoniaque), etc.) durant la réaction de corrosion du matériau oxydable, ce qui diminue les coûts de production de l'hydrogène.

Des aspects préférés mais non limitatifs du dispositif selon l'invention sont les suivants :
- la puissance de la pompe, les dimensions de la chambre de réaction et les dimensions de la chambre de décantation peuvent être configurées de sorte que :
   ∘ la vitesse de circulation du fluide réactionnel est supérieure ou égale à 5 cm/s dans la chambre de réaction, préférentiellement supérieure ou égale à 6 cm/s, et
   ∘ la vitesse de circulation du fluide réactionnel est inférieure ou égale à 4 cm/s dans la chambre de décantation, préférentiellement inférieure à 3cm/s ;
- la chambre de décantation peut comprendre un système de séparation à cyclone ;
- le système de collecte peut être raccordé fluidiquement à la chambre de réaction de l'enceinte réactionnelle pour recevoir le gaz produit par la réaction de corrosion du matériau oxydable, ledit système de collecte comprenant un échangeur thermique pour condenser la vapeur d'eau contenue dans lesdits gaz et former une eau pure condensée ;
- le système de collecte peut comprendre en outre un capteur de liquide et une vanne de sécurité montés entre l'enceinte réactionnelle et l'échangeur thermique, la vanne de sécurité étant :
   ∘ dans un état passant lorsqu'aucun liquide n'est détecté par le capteur de liquide de sorte à autoriser la circulation des gaz entre l'enceinte réactionnelle et le système de collecte,
   ∘ dans un état bloqué lorsqu'un liquide est détecté par le capteur de liquide de sorte à empêcher la circulation des gaz depuis l'enceinte réactionnelle vers l'échangeur thermique ;
- le système de collecte peut comprendre en outre un épurateur monté en aval de l'échangeur thermique pour traiter les gaz issus de l'échangeur thermique ;
- le système de collecte peut comprendre en outre un déverseur en aval de l'échangeur thermique, ledit déverseur autorisant la circulation des gaz vers le récipient de stockage lorsque la pression dans le système de collecte est supérieure ou égale à la haute pression désirée ;
- le système de collecte peut comprendre une vanne d'isolement, ladite vanne d'isolement étant :
   ∘ dans un état bloqué :
      ▪ lorsque le récipient de stockage doit être remplacé, ou
      ▪ lors d'une phase de démarrage de l'installation dans laquelle l'enceinte réactionnelle est remplie avec la solution alcaline,
   ∘ dans un état passant sinon ;
- le système d'approvisionnement en eau pure peut comprendre une citerne contenant de l'eau pure, et une pompe de transfert entre ladite citerne et l'enceinte réactionnelle, ladite pompe de transfert étant configurée pour :
   ∘ transférer de l'eau pure depuis la citerne vers l'enceinte réactionnelle lors d'une phase de récupération de dihydrogène contenu dans une poche de gaz située dans l'enceinte réactionnelle, entre la solution aqueuse alcaline et le système de collecte de gaz,
   ∘ transférer ladite eau pure à une pression supérieure ou égale à la haute pression désirée ;
- la citerne peut être à pression atmosphérique, le système d'approvisionnement comprenant une vanne de dégazage, ladite vanne de dégazage étant :
   ∘ dans un état bloqué durant la réaction de corrosion du matériau oxydable par la solution alcaline, ladite réaction produisant un gaz contenant le dihydrogène,
   ∘ dans un état passant lorsque la réaction de corrosion est terminée, pour diminuer la pression à l'intérieur de l'enceinte réactionnelle et à l'intérieur du système de collecte ;
- le système d'approvisionnement peut comprendre en outre :
   ∘ une vanne d'entrée entre le système de collecte et la citerne, ladite vanne d'entrée étant :
      ▪ dans un état bloqué durant la réaction de corrosion du matériau oxydable par la solution alcaline, de sorte que l'eau pure condensée issue de l'échangeur thermique est réacheminé vers l'enceinte réactionnelle,
      ▪ dans un état passant lorsque la réaction de corrosion est terminée, pour autoriser la circulation de l'eau pure condensée issue de l'échangeur thermique, depuis le système de collecte vers la citerne, et
   ∘ une vanne de sortie entre la citerne et l'enceinte réactionnelle, ladite vanne de sortie étant dans un état passant lorsque la réaction de corrosion est terminée, pour rincer des sous-produits de la réaction de corrosion.

L'invention concerne également un procédé de production de dihydrogène à partir d'une installation comprenant :
- une enceinte réactionnelle destinée à contenir un matériau oxydable, ladite enceinte incluant :
   ∘ une chambre de réaction dans laquelle une réaction de corrosion du matériau oxydable est réalisée, ladite réaction produisant un gaz contenant le dihydrogène, et un fluide réactionnel contenant du matériau oxydé, et
   ∘ une chambre de décantation dans laquelle une réaction de précipitation du matériau oxydé contenu dans le fluide réactionnel est réalisée,
- un système d'alimentation en solution alcaline raccordé fluidiquement à l'enceinte réactionnelle,
- un système d'approvisionnement en eau pure raccordé fluidiquement à l'enceinte réactionnelle,
- un système de collecte du dihydrogène en aval de l'enceinte réactionnel, le système de collecte étant raccordé fluidiquement à l'enceinte réactionnelle, et au système d'approvisionnement, le système de collecte comprenant une borne pour connecter un récipient de stockage configuré pour stocker le dihydrogène produit à une haute pression désirée supérieure ou égale à 60 bars, préférentiellement supérieure à 150 bars, encore plus préférentiellement supérieure à 250 bars, notamment de l'ordre de 350bars,

remarquable en ce que le procédé comprend une étape de brassage du fluide réactionnel pour assurer la circulation du fluide réactionnel :
   - à une première vitesse de circulation dans la chambre de réaction, et
   - à une deuxième vitesse de circulation dans la chambre de décantation,
la deuxième vitesse de circulation étant inférieure à la première vitesse de circulation.

### BRÈVE DESCRIPTION DES DESSINS

D'autres avantages et caractéristiques de l'installation de production d'hydrogène et de son procédé associé ressortiront mieux de la description qui va suivre de plusieurs variantes d'exécution, données à titre d'exemples non limitatifs, à partir des dessins annexés sur lesquels :
- La figure 1 est une représentation schématique de différents groupes fonctionnels constituant l'installation de production d'hydrogène,
- La figure 2 est une représentation schématique détaillée d'une enceinte réactionnelle,
- La figure 3 est une représentation schématique détaillée d'un système d'alimentation en solution aqueuse alcaline,
- La figure 4 est une représentation schématique détaillée d'un système d'approvisionnement en eau pure,
- La figure 5 est une représentation schématique détaillée d'un système de collecte d'hydrogène,
- Les figures 6a à 6d illustrent le principe de fonctionnement de l'installation de production d'hydrogène représentée à la figure 1.

### DESCRIPTION DETAILLEE DE L'INVENTION

On va maintenant décrire différents exemples de réalisation de l'invention en référence aux figures. Dans ces différentes figures, les éléments équivalents sont désignés par la même référence numérique.

### 1. Présentation générale

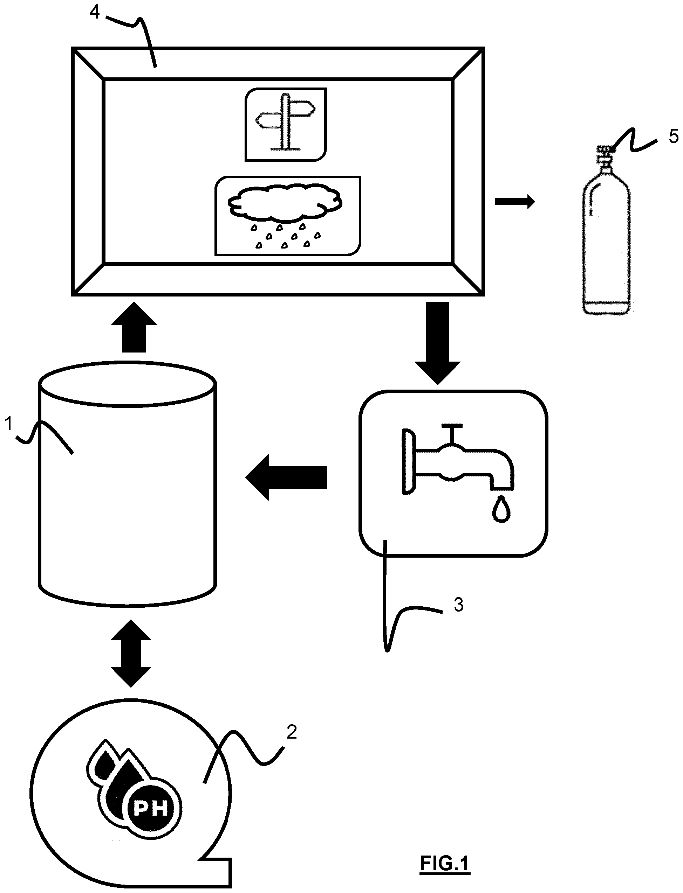

En référence à la figure 1, l'installation est composée de différents groupes ayant chacun une fonction spécifique dans le cadre de la production d'hydrogène.

En particulier, l'installation comprend :
- une enceinte réactionnelle 1,
- un système d'alimentation 2 en solution aqueuse alcaline en amont de l'enceinte réactionnelle,
- un système d'approvisionnement 3 en eau pure en aval du système d'alimentation en solution aqueuse alcaline,
- un système de collecte 4 d'hydrogène en aval de l'enceinte réactionnelle,
- une unité de contrôle (non représentée) pour piloter les différents composants de l'enceinte réactionnelle 1, du système d'alimentation 2, du système d'approvisionnement 3 et du système de collecte 4.

L'enceinte réactionnelle 1 permet la mise en oeuvre d'une réaction de corrosion d'un matériau oxydable avec l'eau contenue dans la solution aqueuse alcaline.

Le système d'alimentation 2 en solution aqueuse alcaline permet :
- d'injecter la solution aqueuse alcaline dans l'enceinte réactionnelle 1 en début de réaction afin de remplir l'enceinte réactionnelle avec la solution aqueuse alcaline, et
- d'extraire la solution aqueuse alcaline contenue dans l'enceinte réactionnelle 1 en fin de réaction afin de vider l'enceinte réactionnelle 1.

Le système d'approvisionnement 3 en eau pure permet d'injecter de l'eau pure dans l'enceinte réactionnelle 1 en fin de réaction afin :
- de limiter les pertes en hydrogène produit (élimination d'un ciel gazeux contenu dans l'enceinte réactionnelle en fin de réaction), et/ou
- de rincer les sous-produits formés suite à la réaction de corrosion du matériau oxydable avec l'eau.

Le système de collecte 4 permet :
- d'une part de filtrer les gaz de sortie de l'enceinte réactionnelle afin de séparer la vapeur d'eau de l'hydrogène contenu dans le gaz de sortie de l'enceinte réactionnelle, et
- d'autre part d'acheminer l'hydrogène vers un récipient 5 (tel qu'une bouteille) pour son stockage.

Le matériau oxydable peut être choisi parmi un métal - tel que du magnésium ou du silicium ou de l'aluminium - ou un alliage métallique - tel qu'un alliage 1050 ou un alliage 4032 ou un alliage 4043 ou un alliage 6060 ou un alliage 2017 (ou tout autre alliage métallique connu de l'homme du métier). Ceci permet de limiter les coûts de production de l'hydrogène. Bien entendu, d'autres matériaux oxydables connus de l'homme du métier peuvent également être utilisés. Dans la suite, on présentera l'invention en faisant référence à l'utilisation d'aluminium en tant que matériau oxydable, étant entendu que le dispositif et le procédé selon l'invention ne se limitent pas à l'utilisation d'aluminium pour produire de l'hydrogène.

On entend, dans le cadre de la présente invention, par « *solution aqueuse alcaline »,* une solution aqueuse dont le pH est supérieur à 7. Cette solution aqueuse alcaline est par exemple composée d'eau pure et d'un (ou plusieurs) alcali(s).

Le (ou les) alcali(s) peut (peuvent) par exemple être choisi(s) parmi de l'hydroxyde de sodium (soude), de l'hydroxyde de potassium (potasse), de l'hydroxyde de lithium, de l'hydroxyde d'ammonium (ammoniaque).

Avantageusement, lorsque le matériau oxydable consiste en du Magnésium ou l'un de ses alliages, du chlorure de sodium et/ou du chlorure de potassium peuvent être utilisés à la place de l'alcali (ou des alcalis).

Dans la suite, on présentera l'invention en référence à l'utilisation d'hydroxyde de soude, étant entendu que le dispositif et le procédé selon l'invention ne se limitent pas à l'utilisation d'hydroxyde de soude pour produire de l'hydrogène.

Dans le contexte de l'invention, une *« eau pure »* se définit comme une eau contenant des molécules d'eau H₂O, et éventuellement des traces de sels minéraux. Ainsi, dans le contexte de l'invention, une eau distillée ou une eau déminéralisée est considérée comme une eau pure, au même titre qu'une eau osmosée.

### 2. Enceinte réactionnelle

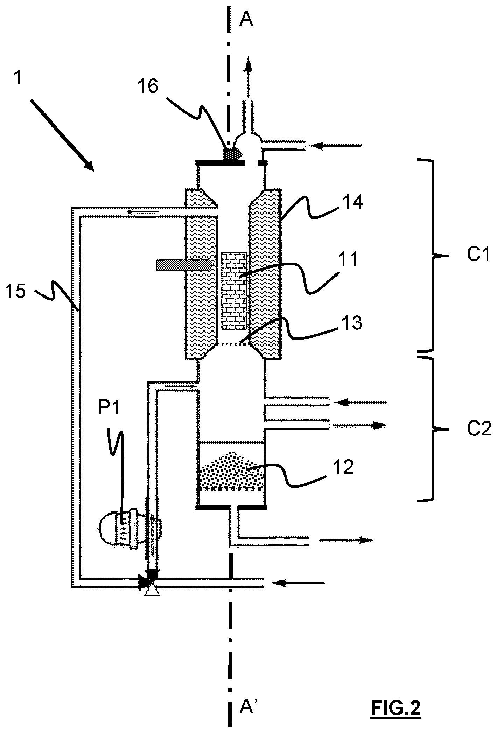

En référence à la figure 2, l'enceinte réactionnelle 1 est configurée pour contenir les réactifs, à savoir :
- l'aluminium 11 (matériau oxydable),
- la solution aqueuse alcaline composée d'eau et d'hydroxyde de sodium (alcali).

Elle est adaptée pour supporter des pressions supérieures à 30 bars, notamment supérieures à 60 bars. En particulier, l'enceinte réactionnelle est adaptée pour supporter des pressions supérieures à 150 bars, préférentiellement supérieure à 200 bars, et encore plus préférentiellement supérieure à 350 bars. Par ailleurs, l'enceinte réactionnelle 1 est configurée pour résister à la corrosion. Enfin, la réaction de corrosion de l'aluminium 11 étant exothermique, l'enceinte réactionnelle 1 est configurée pour supporter des températures supérieures ou égale à 200°C. Pour répondre à ces différentes contraintes, le matériau constituant l'enceinte réactionnelle 1 peut être du Nickel, ou un alliage de Nickel.

La réaction de corrosion de l'aluminium 11 avec l'eau en présence d'hydroxyde de sodium induit la production d'oxydes et d'hydroxydes d'aluminium. L'enceinte réactionnelle 1 est configurée pour provoquer la précipitation de ces oxydes et hydroxydes d'aluminium sous forme d'aluminates 12, et pour contenir ces aluminates 12.

A cet effet, l'enceinte réactionnelle 1 comprend des première et deuxième chambres C1, C2 étanches aux gaz :
- la première chambre C1 - dite « *chambre de réaction* » - délimite une zone dans laquelle la réaction de corrosion de l'aluminium 11 par la solution aqueuse alcaline est réalisée,
- la deuxième chambre C2 - dite *« chambre de décantation* » - délimite une zone dans laquelle les oxydes et hydroxydes d'aluminium précipitent sous forme d'aluminates 12.

Dans le mode de réalisation illustré à la figure 2, la chambre de réaction C1 est montée sur la chambre de décantation C2. En particulier, les chambres de réaction C1 et de décantation C2 sont réalisées dans un seul et même logement cylindrique composé d'un fond, d'un couvercle supérieur et d'une paroi latérale entre le fond et le couvercle. L'intégration des chambres de réaction C1 et de décantation C2 dans un même logement permet de limiter les risques de fuites liées à un défaut d'étanchéité de l'enceinte réactionnelle 1. Ceci permet également de limiter l'encombrement de l'enceinte réactionnelle 1. Avantageusement, la chambre de réaction C1 peut être située au-dessus de la chambre de décantation C2 (selon un axe vertical A-A'). Ceci permet d'éviter la circulation des aluminates dans la chambre de réaction une fois ceux-ci précipités : les aluminates se déposent dans la chambre de décantation C2, par exemple au niveau d'un réservoir amovible pour faciliter leur extraction de l'enceinte réactionnelle 1 en fin de réaction.

En variante, les chambres de réaction C1 et de décantation C2 peuvent être réalisées dans des logements distincts et séparés, lesdits logements étant raccordés par l'intermédiaire de canalisations pour permettre la circulation du fluide réactionnel entre les chambres de réaction C1 et de décantation C2. Ceci permet notamment d'utiliser des chambres de réaction C1 et de décantation C2 de formes et dimensions différentes. Ceci permet également de réduire la hauteur de l'enceinte réactionnelle 1.

Avantageusement, la chambre de réaction C1 peut comprendre un accumulateur de calories 14 s'étendant sur la (ou les) parois latérale(s) de la chambre de réaction C1. Ceci permet de limiter les risques d'augmentation de température dans l'enceinte réactionnelle 1 au-delà de 250°C.

En effet, un tel accumulateur de calories 14 est apte à :
- absorber l'énergie dissipée sous forme de chaleur lors de la réaction de corrosion de l'aluminium 11, en particulier lorsque la température dans la chambre de réaction C1 augmente et atteint un seuil de température,
- restituer sous forme de chaleur l'énergie absorbée lorsque la température dans la chambre de réaction C1 diminue en dessous du seuil de température.

Ainsi, l'accumulateur de calories 14 permet :
- d'emmagasiner de l'énergie thermique lors de la réaction de corrosion de l'aluminium 11 avec l'eau afin de limiter l'échauffement des parois de l'enceinte réactionnelle 1, et
- de la restituer ultérieurement.

Dans certaines variantes de réalisation, l'accumulateur de calories 14 peut comprendre :
- une cloison destinée à venir en contact thermique avec la (ou les) paroi(s) latérale(s) de la chambre de réaction C1, la cloison incluant un pan inférieur, un pan supérieur et une paire de pans latéraux entre les pans inférieure et supérieure,
- un matériau à changement de phase (ou MCP) contenu dans la cloison.

Le MCP est un matériau capable de changer d'état physique (solide/liquide) dans une plage de température restreinte (par exemple comprise entre 200 °C et 250 °C). Ainsi, le MCP présente la particularité de passer de l'état liquide à l'état solide à une température voisine de 200°C. La réaction de solidification (i.e. passage de l'état liquide à l'état solide est exothermique. La réaction de liquéfaction (passage de l'état solide à l'état liquide)) est endothermique. L'intégration d'un tel accumulateur de calories 14 permet donc un meilleur contrôle de la température à l'intérieur de l'enceinte réactionnelle 1.

L'enceinte réactionnelle 1 comprend également une unité de brassage pour favoriser la circulation du fluide réactionnel entre la chambre de réaction C1 et la chambre de décantation C2.

Dans le mode de réalisation illustré à la figure 2, l'unité de brassage consiste en une pompe centrifuge P1 raccordée à la chambre de réaction C1 et à la chambre de décantation C2 par l'intermédiaire d'un canal de circulation 15. En particulier, la pompe centrifuge P1 est agencée de sorte à :
- pomper le fluide réactionnel dans une partie supérieure de la chambre de réaction C1, et à
- injecter le fluide réactionnel ainsi pompé dans une partir supérieure de la chambre de décantation C2.

Pour ce faire, la chambre de réaction C1 comprend un premier membre d'accès tubulaire disposé dans sa partie supérieure (c'est-à-dire plus proche du couvercle du logement que de la grille du logement), et la chambre de décantation C2 comprend un deuxième membre d'accès tubulaire disposé dans sa partie supérieure (c'est-à-dire plus proche de la grille du logement que du fond du logement). La pompe centrifuge P1 est raccordée aux chambres de réaction C1 et de décantation C2 de sorte à :
- aspirer le fluide réactionnel contenu dans la chambre de réaction C1 au niveau du premier membre d'accès, et à
- refouler le fluide réactionnel dans la chambre de décantation au niveau du deuxième membre d'accès.

En variante, l'unité de brassage peut consister en une hélice incluant un arbre et deux (ou quatre) pales à l'une des extrémités de l'arbre, l'autre extrémité de l'arbre étant connecté à un moteur pour induire la mise en rotation de l'arbre et des pales de l'hélice. Dans ce cas, l'hélice est directement plongée dans le logement, entre les chambres de réaction C1 et de décantation C2.

Avantageusement, les dimensions des chambres de réaction C1 et de décantation C2 ainsi que les caractéristiques de l'unité de brassage sont choisies de sorte que :
- la vitesse de circulation du fluide réactionnel dans la chambre de réaction C1 soit comprise entre 5 et 15 cm/s, préférentiellement 6 et 15 cm/s, et encore plus préférentiellement compris entre 6 et 10 cm/s,
- la vitesse de circulation du fluide réactionnel dans la chambre de décantation soit comprise entre 0.1 et 4 cm/s, préférentiellement 1 et 3 cm/s, et encore plus préférentiellement compris entre 2 et 3 cm/s.

Le fait que, dans la chambre de réaction C1, la vitesse de circulation du fluide réactionnel soit supérieure ou égale à 5 cm/s (préférentiellement supérieure ou égale à 6 cm/s) permet de favoriser l'évacuation des sous-produits de la réaction de corrosion de l'aluminium hors de la chambre de réaction (et donc limite le risque de ralentissement de la réaction de corrosion du fait de l'alumine).

Le fait que, dans la chambre de décantation C2, la vitesse de circulation du fluide réactionnel soit inférieure ou égale à 4 cm/s (préférentiellement inférieure ou égale à 3 cm/s) permet :
- d'une part de favoriser la précipitation de l'aluminate de sodium formé lors de la réaction de corrosion de l'aluminium, et
- d'autre de favoriser la séparation (par décantation) des particules solides (alumine) contenues dans le fluide réactionnel ; les particules solides 12 ainsi séparées sont avantageusement récoltées dans une embase de la chambre de décantation C2.

Pour obtenir des vitesses de circulation différentes entre la chambre de réaction et la chambre de décantation (et notamment des vitesses de l'ordre de 6cm/s dans la chambre de réaction et de 3cm/s dans la chambre de décantation), le diamètre de la chambre de réaction peut être réduit relativement au diamètre de la chambre de décantation (dans le cas de chambres cylindriques). Cette diminution de diamètre dans la chambre de réaction peut être obtenue :
- soit par la réduction locale du diamètre du logement de l'enceinte réactionnelle,
- soit par l'insertion d'un insert dans le logement (par exemple insert en PTFE de forme cylindrique incluant un canal traversant de diamètre réduit s'étendant le long de son axe de révolution).

Dans certains modes de réalisation, la chambre de décantation C2 peut comprendre un système de séparation à cyclone (ou hydrocyclone) pour favoriser la séparation du fluide réactionnel des particules solides qu'il contient. Un tel système de séparation à cyclone (non représenté) est connu de l'homme du métier et ne sera pas décrit plus en détails dans la suite.

Optionnellement, une unité de refroidissement peut être montée sur les parois de la chambre de décantation C2 pour diminuer la température du fluide réactionnel. Ceci permet de favoriser la précipitation des oxydes et hydroxydes d'aluminium contenus dans le fluide réactionnel sous forme d'aluminates 12.

L'enceinte réactionnelle 1 comprend un support de matériau oxydable pour porter le matériau oxydable. Dans le mode de réalisation illustré à la figure 2, le support consiste en une grille 13 séparant les chambres de réaction C1 et de décantation C2, et dont les ouvertures traversantes permettent le passage du fluide réactionnel entre la chambre de décantation C2 et la chambre de réaction C1. Dans d'autres modes de réalisation, le support de matériau oxydable peut consister en un pilier amovible dont l'une des extrémités repose sur le fond du logement, et dont l'extrémité libre s'étend dans la chambre de réaction, à l'interface entre la chambre de réaction C1 et la chambre de décantation C2.

Avantageusement, l'enceinte réactionnelle peut comprendre un capteur de remplissage 16 disposé entre la chambre de réaction C1 et le système de collecte 4. Le capteur de remplissage 16 permet de détecter la présence de solution aqueuse alcaline. Son positionnement permet d'indiquer, à l'unité de contrôle, l'instant auquel le volume maximal de solution aqueuse alcaline que l'enceinte réactionnelle 1 peut contenir est atteint, en particulier lors du remplissage de l'enceinte réactionnelle 1 avec la solution aqueuse alcaline 21, comme il sera décrit plus en détails dans la suite.

### 3. Système d'alimentation en solution aqueuse alcaline

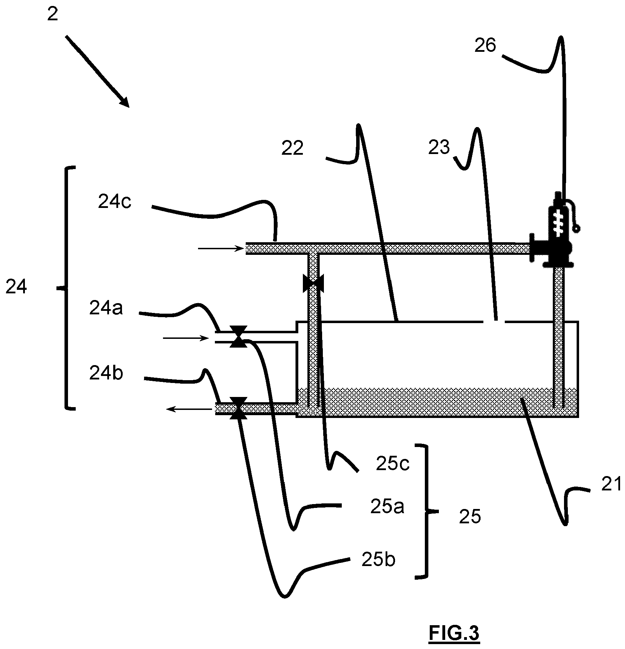

En référence à la figure 3, le système d'alimentation 2 est configuré pour :
- remplir l'enceinte réactionnelle 1 avec la solution aqueuse alcaline 21 en début de réaction, et pour
- stocker la solution aqueuse alcaline 21 en fin de réaction.

La solution aqueuse alcaline 21 peut comprendre de l'eau mélangée à de l'hydroxyde de soude (NaOH) ou de l'hydroxyde de potassium (KOH) avec une concentration entre 0.5% et 20%.

Le système d'alimentation 2 comprend une cuve 22 adaptée pour contenir la solution aqueuse alcaline 21. Cette cuve 22 peut présenter différentes formes et être réalisée dans différents matériaux aptes à résister à la corrosion (tel que du Nickel ou un alliage de Nickel).

La cuve 22 est mise à la pression atmosphérique par l'intermédiaire d'un orifice 23 de mise à l'air libre ménagé dans la paroi supérieure de la cuve 22. Cet orifice 23 permet d'éviter la formation d'une dépression dans la cuve 22 lorsque la solution aqueuse alcaline 21 est injectée dans l'enceinte réactionnelle 1 en début de réaction. L'orifice 23 permet en outre le remplissage de la cuve 22 avec la solution aqueuse alcaline, comme il sera décrit plus en détails dans la suite.

Le système d'alimentation 2 comprend également un (ou plusieurs) conduit(s) 24 permettant la mise en communication fluidique de la cuve 22 avec l'enceinte réactionnelle 1. Chaque conduit 24 peut être associé à une vanne de circulation 25 commandable électriquement (i.e. électrovanne) pour autoriser (lorsque la vanne de circulation 25 est dans un état ouvert) ou empêcher (lorsque la vanne de circulation 25 est dans un état fermé) le passage de la solution aqueuse alcaline 21 entre la cuve 22 et l'enceinte réactionnelle 1. Ceci permet d'assurer :
- le remplissage de l'enceinte réactionnelle 1 avec la solution aqueuse alcaline 21 en début de réaction,
- la vidange de l'enceinte réactionnelle 1 de la solution aqueuse alcaline 21 en fin de réaction.

Dans le mode de réalisation illustré à la figure 3, le système d'alimentation 2 comprend des premier, deuxième et troisième conduits 24a, 24b, 24c associés respectivement à des première, deuxième et troisième vannes de circulation 25a, 25b, 25c :
- le premier conduit 24a (associé à la première vanne de circulation 25a) permet le passage de la solution aqueuse alcaline depuis l'enceinte réactionnelle 1 vers la cuve 22 ; ce premier conduit 24a permet la vidange de l'enceinte réactionnelle 1 en fin de réaction,
- le deuxième conduit 24b (associé à la deuxième vanne de circulation 25b) permet le passage de la solution aqueuse alcaline depuis la cuve 22 vers l'enceinte réactionnelle 1 ; ce deuxième conduit 24b permet le remplissage de l'enceinte réactionnelle 1 en début de réaction,
- le troisième conduit 24c (associé à la troisième vanne de circulation 25c) permet la purge des différents tubes de l'installation lors du remplissage de l'enceinte réactionnelle 1.

En référence à la figure 3, le système d'alimentation 2 est dépourvu de pompe de circulation. En effet, dans ce mode de réalisation, c'est la pompe centrifuge P1 - formant unité de brassage de l'enceinte réactionnelle 1 - qui assure le déplacement de la solution aqueuse alcaline 21 à travers le (ou les) conduit(s) 24 :
- entre la cuve 22 et l'enceinte réactionnelle 1 en début de réaction, et
- entre l'enceinte réactionnelle 1 et la cuve 22 en fin de réaction.

En variante, le système d'alimentation 2 peut inclure une pompe - par exemple de type pompe péristaltique ou pompe à galet - pour la mise en circulation de la solution aqueuse alcaline 21 entre la cuve 22 et l'enceinte réactionnelle 1.

Bien entendu, le système d'alimentation 2 peut comprendre d'autres composants connus de l'homme du métier tels que :
- une soupape de sécurité 26 pour limiter les risques de surpression dans la cuve 22,
- une trappe (non représentée) pour l'introduction d'hydroxyde de soude ou de potassium par exemple conditionné sous forme de pastilles,
- un trou de purge (non représenté) pour vider la solution aqueuse alcaline 21 contenue dans la cuve 22, etc.

### 4. Système d'approvisionnement en eau pure

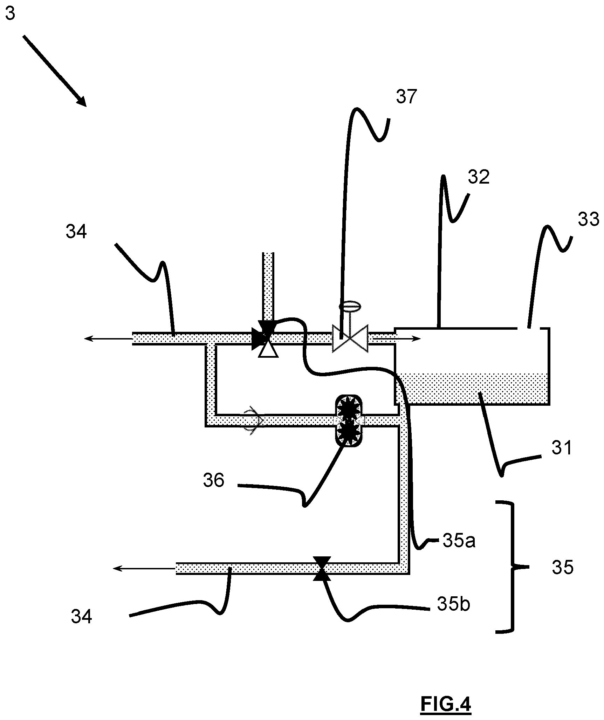

En référence à la figure 4, le système d'approvisionnement 3 est configuré pour :
- injecter de l'eau pure dans l'enceinte réactionnelle 1 en fin de réaction :
   ∘ afin d'éliminer un ciel gazeux formé au-dessus du fluide réactionnel durant la réaction de corrosion du matériau oxydable, et/ou
   ∘ afin de rincer le matériau oxydable résiduel restant en fin de réaction, et/ou
   ∘ afin de rincer les aluminates 12 (sous-produits solides) séparés du fluide réactionnel et récoltés dans l'embase de la chambre de décantation,
- récupérer de l'eau pure 31 issue du système de collecte 4 lors du filtrage des gaz produits dans l'enceinte réactionnelle 1 pendant la réaction de corrosion de l'aluminium.

Le système d'approvisionnement 3 comprend une citerne 32 configurée pour contenir l'eau pure 31. Cette citerne 32 peut présenter différentes formes et être réalisée dans différents matériaux tel que de l'acier, de l'aluminium ou un plastique.

La citerne 32 est mise à la pression atmosphérique par l'intermédiaire d'une lumière 33 de mise à l'air libre. Cette lumière 33 permet d'éviter la formation d'une dépression dans la citerne 32 lorsque l'eau pure 31 est injectée dans l'enceinte réactionnelle 1, ou d'une surpression dans la citerne lorsque de l'eau pure est introduite dans celle-ci.

Le système d'approvisionnement 3 comprend également un (ou plusieurs) tuyau(x) 34 permettant la mise en communication fluidique de la citerne 32 avec l'enceinte réactionnelle 1, chaque tuyau 34 étant associé à une vanne 35 commandable électriquement pour autoriser ou non le passage de l'eau pure 31 à travers ledit tuyau 34.

Dans le mode de réalisation illustré à la figure 4, le système d'approvisionnement 3 comprend une vanne d'entrée 35a disposée entre la citerne 32 et le système de collecte 4, et une vanne de sortie 35b entre la citerne 32 et l'enceinte réactionnelle 1 :
- lorsque la vanne d'entrée 35a est dans un état passant (et que la vanne de sortie 35b est dans un état non passant), elle autorise le passage d'eau pure (obtenue par condensation comme il sera expliqué plus en détails dans la suite) entre le système de collecte 4 et la citerne 32 pour remplir celle-ci ;
- lorsque la vanne de sortie 35b est dans un état passant (et que la vanne d'entrée 35a est dans un état non passant), elle autorise le passage d'eau pure entre la citerne 32 et la chambre de décantation de l'enceinte réactionnelle, soit pour compenser une perte de liquide au cours de la réaction de corrosion, soit pour rincer les sous-produits en fin de réaction.

Optionnellement, le système d'approvisionnement 3 peut également comporter une pompe de transfert haute pression 36 pour assurer le déplacement de l'eau pure 31 entre la citerne 32 et l'enceinte réactionnelle 1.

Le fait d'injecter de l'eau pure 31 dans l'enceinte réactionnelle 1 permet :
- durant la réaction de corrosion, de compenser la perte en eau du fluide réactionnel,
- en fin de réaction de corrosion, de minimiser les pertes en hydrogène en « *poussant »* le ciel gazeux vers le système de collecte 4,
- après la réaction de corrosion et vidange du fluide réactionnel dans le bac 22, de rincer les éléments contenus dans l'enceinte réactionnelle (aluminium 11 restant, aluminates 12, etc.).

Avantageusement, le système d'approvisionnement 3 peut comprendre une vanne de dégazage 37 pour permettre de diminuer progressivement la pression à l'intérieur de l'enceinte réactionnelle 1 en fin de réaction, et notamment pour ramener l'installation à la pression atmosphérique lorsque tout le matériau oxydable a été consommé.

Bien entendu, le système d'approvisionnement 3 peut comprendre d'autres composants connus de l'homme du métier tels que :
- un clapet anti-retour sur le (ou les ou certains) tuyau(x),
- un trou de remplissage pour introduire l'eau pure dans le l'installation,
- un système de vidange, etc.

### 5. Système de collecte de gaz

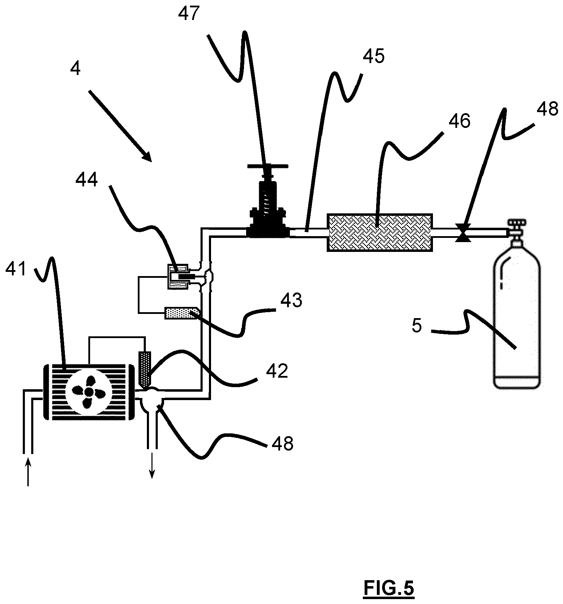

En référence à la figure 5, le système de collecte de gaz est configuré pour :
- récupérer les gaz générés lors de la réaction de corrosion de l'aluminium 11,
- filtrer lesdits gaz pour séparer l'hydrogène des autres composés contenus dans les gaz générés,
- raccorder l'installation à un réservoir de stockage de l'hydrogène produit lors de la réaction de corrosion.

En particulier, le système de collecte 4 est adapté pour :
- refroidir les gaz générés dans l'enceinte réactionnelle 1,
- condenser la vapeur d'eau contenue dans lesdits gaz, et faire revenir l'eau pure ainsi condensée :
   ∘ dans l'enceinte réactionnelle 1 pendant la mise en oeuvre de la réaction de corrosion (étape de la production d'hydrogène), ou
   ∘ dans la citerne 32 du système d'approvisionnement 3 en fin de réaction.

Pour le filtrage des gaz générés par la réaction de corrosion de l'aluminium 11, le système de collecte comprend un échangeur thermique 41 pour refroidir les gaz générés afin d'en extraire la vapeur d'eau.

L'échangeur thermique 41 est configuré pour supporter de hautes pressions (pressions supérieures à 30 bars, notamment supérieures à 60 bars, préférentiellement supérieures à 150 bars, plus préférentiellement supérieures à 250 bars et encore plus préférentiellement supérieures à 350 bars), et de fortes températures (températures supérieures ou égales à 200°C, notamment supérieures ou égales à 250°C). L'échangeur thermique 41 est par exemple du type à refroidissement par air. Par exemple, l'échangeur thermique 41 peut comprendre :
- un serpentin (non représenté) à l'intérieur duquel les gaz issus de l'enceinte réactionnelle 1 circulent, les faces externes des parois du serpentin incluant des ailettes de refroidissement,
- une soufflerie (non représentée) - tel qu'un ventilateur - pout favoriser les échanges de chaleur entre les gaz circulant dans le serpentin et l'air extérieur.

En variante, l'échangeur thermique 41 peut être du type à refroidissement par fluide caloporteur.

Le système de collecte 4 comprend également un capteur de température 42 en communication avec l'unité de contrôle (non représentée) de l'installation, l'unité de contrôle activant l'échangeur thermique 41 lorsque la température mesurée par le capteur de température 42 est supérieure à une valeur seuil prédéfinie (par exemple 50°C).

L'échangeur thermique 41 permet de condenser la vapeur d'eau contenue dans les gaz sortant de l'enceinte réactionnelle 1 pour former de l'eau pure liquide. Cette eau pure liquide (ou condensat) est séparée de l'hydrogène grâce à un séparateur de condensat 48 disposé à la sortie de l'échangeur thermique 41.

Durant la réaction de corrosion, l'eau pure liquide est réintroduite dans la chambre de réaction C1 l'enceinte réactionnelle 1. En fin de réaction de corrosion, l'eau pure est réintroduite dans la citerne 32 du système d'approvisionnement 3.

A cet effet, l'échangeur thermique 41 est en communication fluidique - via une (ou plusieurs) canalisation(s) - avec l'enceinte réactionnelle 1 d'une part, et avec le système d'approvisionnement 3 d'autre part, une (ou plusieurs) vanne(s) d'orientation commandée(s) (par exemple une (ou plusieurs) électrovanne(s)) agencée(s) le long de la (ou des) canalisation(s) permettant d'orienter la circulation de l'eau condensée vers l'enceinte réactionnelle 1 ou vers le système d'approvisionnement 3.

Optionnellement, le système de collecte 4 peut comprendre un capteur de liquide 43 et une vanne de sécurité commandée 44 en aval de l'échangeur thermique 41. Le capteur de liquide 43 et la vanne de sécurité 44 sont configurés pour communiquer avec l'unité de contrôle.

En particulier :
- le capteur de liquide 43 permet de détecter la présence de liquide corrosif en aval de l'échangeur thermique 41 ; lorsqu'un liquide corrosif est détecté par le capteur de liquide 43, celui-ci transmet un signal à l'unité de contrôle de l'installation,
- la vanne de sécurité 44 permet d'ouvrir ou de fermer un passage vers le récipient de stockage 5 de l'hydrogène produit :
   ∘ si un liquide corrosif est détecté par le capteur de liquide 43, l'unité de contrôle commande la fermeture de la vanne de sécurité 44 pour empêcher la propagation dudit liquide corrosif vers le récipient de stockage 5,
   ∘ si aucun liquide corrosif n'est détecté par le capteur de liquide 43, l'unité de contrôle commande l'ouverture de la vanne de sécurité 44 pour autoriser le passage des gaz vers le récipient de stockage 5.

La présence d'un capteur de liquide 43 associé à une vanne de sécurité 44 dont l'ouverture et la fermeture sont commandées par le contrôleur permet de limiter les risques de dégradation du récipient de stockage avec du liquide corrosif.

Pour permettre la circulation des gaz entre l'échangeur thermique 41 et le récipient de stockage 5, le système de collecte 4 comprend une conduite 45 de circulation des gaz raccordée à l'échangeur thermique 41 d'une part et au récipient de stockage 5 d'autre part.

Toutefois, avant d'être stocké dans le récipient de stockage 5, l'hydrogène doit être traité pour présenter une pureté donnée et/ou un taux d'humidité donné qui dépendent de spécifications techniques du récipient de stockage 5 et/ou de l'application visée. C'est pourquoi le système de collecte 4 comprend un épurateur de gaz 46 monté le long de la conduite de circulation 45 des gaz entre l'échangeur thermique 41 et le récipient de stockage 5. Cet épurateur 46 peut contenir un produit dessiccant (type silicagel, CaO, CaCl₂ ou autres), et/ou un charbon actif, et/ou un filtre à particules, et/ou une membrane hydrophobe, et/ou une membrane en palladium, etc....

Avantageusement, le système de collecte 4 peut comporter un déverseur 47 (ou réducteur de pression) monté le long de la conduite 45 de circulation des gaz. Ce déverseur 47 permet de réguler la pression du gaz dans le système de collecte 4 afin de la faire correspondre à la pression souhaitée pour le récipient de stockage 5 (par exemple stockage de l'hydrogène à une pression de 150 bars, ou 200 bars, ou 350 bars, etc.).

Enfin, le système de collecte 4 peut comporter une vanne d'isolement 48 en aval de l'épurateur 46 pour ouvrir/fermer (manuellement ou automatiquement) le passage entre l'épurateur 46 et le récipient de stockage 5. Ceci permet de fermer la conduite 45 de circulation des gaz afin de déconnecter le récipient de stockage lorsque celui-ci est plein et le remplacer par un récipient de stockage vide.

### 6. Principe de fonctionnement

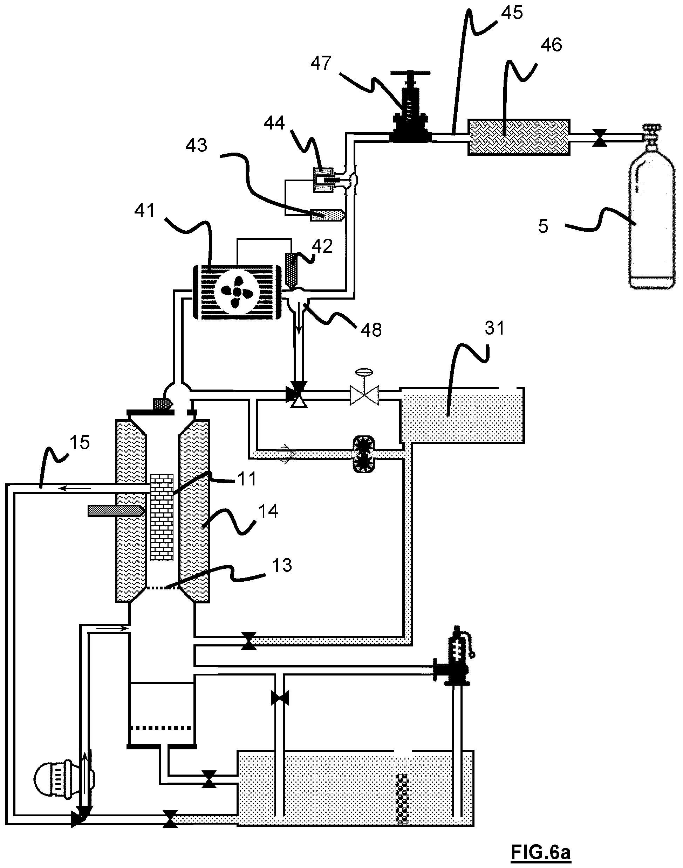

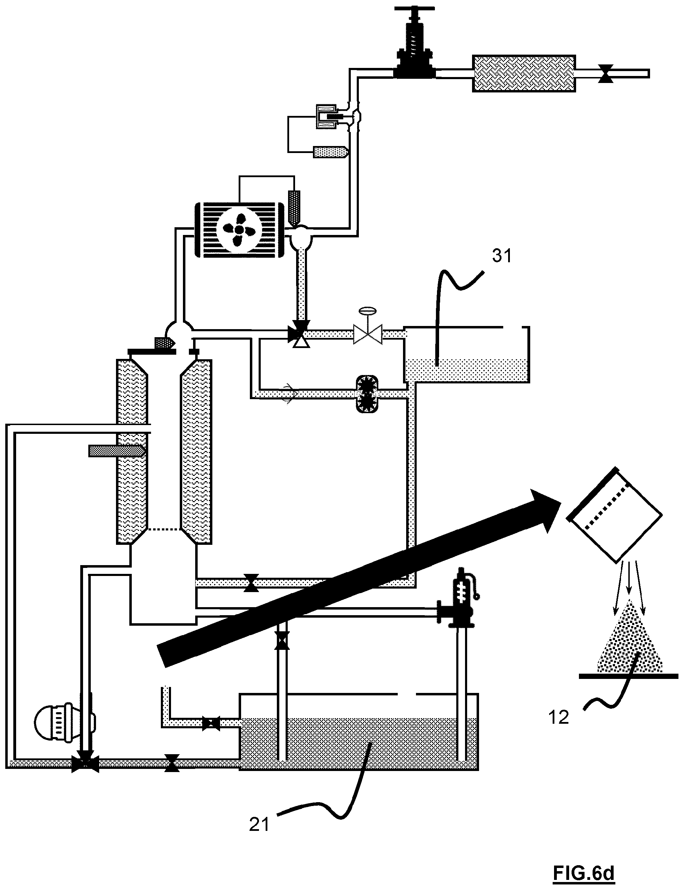

On va maintenant décrire le principe de fonctionnement de l'installation de production d'hydrogène en référence aux figures 6a à 6d.

### 6.1. Préparation

Une première phase du procédé de production d'hydrogène concerne la préparation de l'installation, et notamment son chargement pour la mise en oeuvre de la réaction de corrosion.

### 6.1.1. Elaboration de la solution aqueuse alcaline

Lorsque l'installation n'a pas encore été utilisée, une première étape de la phase de préparation concerne l'élaboration de la solution aqueuse alcaline. A cet effet :
- la cuve 22 du système d'alimentation est remplie d'eau pure, par exemple à travers l'orifice 23 de mise à l'air libre, et
- de l'hydroxyde de soude (par exemple conditionné sous la forme d'une ou plusieurs pastilles) est introduit dans la cuve 22, par exemple à travers l'orifice 23.

L'eau pure et l'hydroxyde de soude se mélangent pour former la solution aqueuse alcaline.

Lors de la mise en oeuvre de l'étape d'élaboration, les première et deuxième vannes de circulation 25a, 25b sont dans un état fermé pour maintenir la solution aqueuse alcaline dans la cuve 22.

Avantageusement, l'étape d'élaboration n'est mise en oeuvre qu'une fois lors de la première utilisation de l'installation, la solution aqueuse alcaline étant réutilisable à la fin de la réaction de corrosion.

### 6.1.2. Fourniture d'eau pure

La phase de préparation comprend également une étape de fourniture d'eau pure dans la citerne 32 du système d'approvisionnement.

Cette étape de fourniture d'eau pure peut consister :
- à remplir complètement la citerne avec de l'eau pure lorsque l'installation n'a pas été utilisée, ou
- à ajouter de l'eau pure dans la citerne 32 pour mettre à niveau de la quantité d'eau pure contenue dans la citerne en cas de réutilisation de l'installation.

Qu'il s'agisse du premier remplissage ou d'une mise à niveau, l'eau pure peut être introduite dans le système d'approvisionnement au niveau de la lumière 33 ménagée dans la paroi supérieure de la citerne 32.

### 6.1.3. Insertion du consommable

La phase de préparation comprend de plus une étape de chargement de l'enceinte avec le matériau oxydable (aluminium, etc.) nécessaire à la formation d'hydrogène.

Le matériau oxydable peut présenter la forme d'un bloc. Il est introduit dans la chambre de réaction C1 et placé sur le support de l'enceinte réactionnelle 1 pour permettre son maintien en position durant la réaction de corrosion mise en oeuvre ultérieurement.

### 6.2. Réaction de corrosion

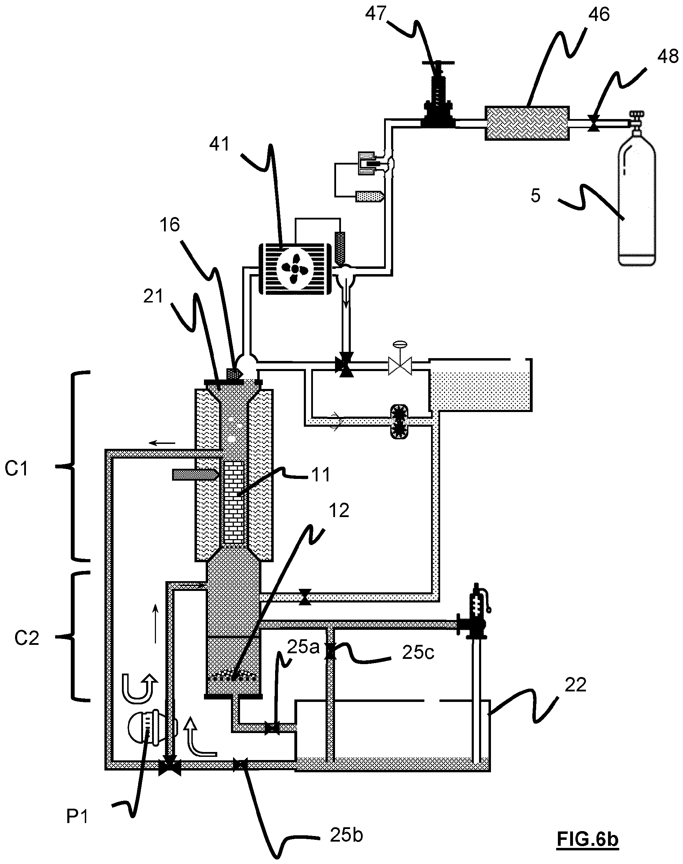

En référence à la figure 6b, une deuxième phase du procédé concerne la réaction de corrosion. Cette phase de réaction de corrosion se décompose en différentes étapes :
- une étape de démarrage dans laquelle les différents réactifs sont mélangés dans l'enceinte réactionnelle 1,
- une étape de génération d'hydrogène composée d'un régime transitoire et d'un régime quasi-stationnaire succédant au régime transitoire,
- une étape de finition au cours de laquelle différentes actions sont mises en oeuvre notamment pour la récupération de l'hydrogène, et/ou le rinçage des sous-produits de réaction.

### 6.2.1. Démarrage

Pour initier la réaction de corrosion, les différents réactifs sont mélangés dans l'enceinte réactionnelle 1 qui contient le matériau oxydable.

Notamment durant l'étape de démarrage, l'enceinte réactionnelle 1 est remplie avec la solution aqueuse alcaline 21. Pour ce faire, la deuxième vanne de circulation 25b est commutée dans un état passant pour permettre la circulation de la solution aqueuse alcaline 21 depuis la cuve 22 vers l'enceinte réactionnelle 1. Le déplacement de la solution aqueuse alcaline 21 peut être assuré par tout moyen connu de l'homme du métier (gravité, activation d'une pompe, etc.). Dans le mode de réalisation illustré à la figure 6b, le déplacement de la solution aqueuse alcaline est assuré par l'activation de la pompe centrifuge P1. Durant la sous-étape de remplissage de l'enceinte réactionnelle 1 avec la solution aqueuse alcaline 21, les vannes de circulation 25a, 25c sont ponctuellement ouvertes (état passant) pour chasser l'aire contenu dans les différentes lignes (i.e. canal de circulation 15, conduits 24, etc.) de l'enceinte réactionnelle 1 et du système d'approvisionnement 3. Par ailleurs, durant la sous-étape de remplissage, la vanne d'isolement 48 est fermée (état non passant) pour empêcher que l'air contenu dans l'installation ne pénètre dans le récipient de stockage 5 destiné à contenir l'hydrogène produit. Lorsque le capteur de remplissage 16 détecte la présence de solution aqueuse alcaline 21, alors, l'enceinte réactionnelle 1 est totalement remplie : le volume maximal de solution aqueuse alcaline 21 que peut contenir l'enceinte réactionnelle 1 est atteint. Le capteur de remplissage 16 émet un signal vers l'unité de contrôle qui commande la fermeture de la deuxième vanne de circulation 25b (commutation dans un état non passant) pour empêcher la circulation de la solution aqueuse entre la cuve 22 et l'enceinte réactionnelle 1.

Une fois l'enceinte réactionnelle totalement remplie avec la solution aqueuse alcaline, la réaction de corrosion démarre et de l'hydrogène est produit : la vanne d'isolement 48 est ouverte (soit manuellement, soit automatiquement par l'unité de contrôle) pour autoriser la circulation de l'hydrogène produit entre le système de collecte 4 et le récipient de stockage 5.

### 6.2.2. Génération d'hydrogène

La réaction de corrosion du matériau oxydable débute : l'hydrogène est généré en permanence, la solution réactionnelle circule dans l'enceinte réactionnelle 1 entre les chambres de réaction C1 et de décantation C2.

La pression et la température dans l'enceinte réactionnelle 1 augmentent progressivement. Lorsque la pression dans l'enceinte réactionnelle 1 (et dans le système de collecte de gaz 4) atteint la pression souhaitée pour le récipient de stockage 5 (par exemple 150 bars, 200 bars, 250 bars, 300 bars ou 350 bars), le déverseur 47 s'ouvre et laisse circuler l'hydrogène dans l'épurateur de gaz 46 et ensuite dans le récipient de stockage 5.

En sortie de l'épurateur de gaz 46, l'hydrogène est sec :
- d'une part du fait que l'humidité résiduelle contenue dans les gaz sortant de l'échangeur thermique 41 est chassée par l'absorbeur d'humidité contenu dans l'épurateur, et
- d'autre part du fait que la quantité de vapeur d'eau dans le gaz pour une température donnée est déterminée par le rapport des pressions partielles du gaz et de la vapeur d'eau pour cette température, alors que la pression partielle de la vapeur d'eau dépend uniquement de la température ; ainsi, à une pression de gaz élevée (par exemple 200 atmosphères) et une température relativement basse (par exemple 50 degrés Celsius), la pression partielle de la vapeur d'eau sera faible (~0,12bar ou 0,06% de la pression partielle d'hydrogène) ; on en conclut que l'hydrogène en sortie de l'épurateur de gaz 46 contient une très faible quantité de vapeur d'eau : 0,06% de vapeur d'eau et 99,94% d'hydrogène.

Durant la réaction de corrosion de l'aluminium 11 avec la solution aqueuse alcaline 21, de l'hydrogène, des oxydes d'aluminium et des hydroxydes d'aluminium sont produits dans la chambre de réaction C1. L'hydrogène s'échappe vers le système de collecte de gaz 4, tandis que les oxydes et hydroxydes d'aluminium sont transportés dans le fluide réactionnel vers la chambre de décantation C2 où ils précipitent sous forme d'aluminates 12. L'hydrogène qui s'évacue vers le système de collecte 4 est saturé en vapeurs d'eau et présente une très forte température. Lorsqu'il travers l'échangeur thermique, l'hydrogène est refroidi (à environ 60°C) et la vapeur d'eau excédentaire qu'il contient est condensée sous forme d'eau pure liquide. Cette eau pure liquide est réintroduite dans la chambre de réaction C1 de l'enceinte réactionnelle 1.

### 6.2.3. Fin de la réaction

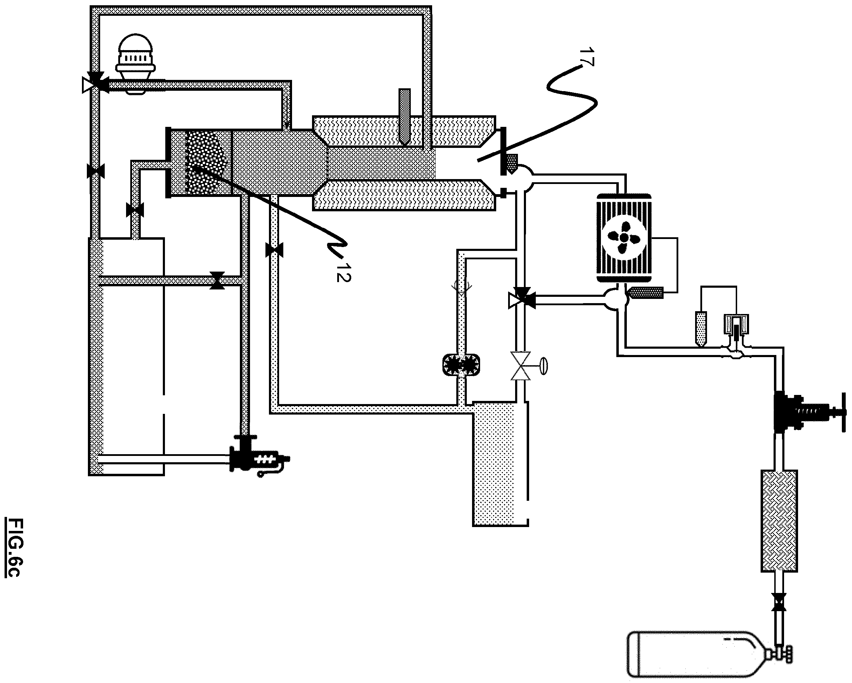

A la fin de la réaction, et comme illustré à la figure 6c :
- le matériau oxydable 11 a été consommé, et
- les sous-produits 12 se trouvent dans la partie basse de la chambre de décantation C2.

La réaction de corrosion étant consommatrice de molécules d'eau, le niveau de solution aqueuse alcaline contenu dans l'enceinte réactionnelle 1 est plus faible en fin de réaction qu'en début de réaction.

De ce fait une poche gazeuse 17 - appelée « ciel gazeux » - à haute pression contenant environ 30% d'hydrogène produite lors de la réaction est présente dans la chambre de réaction C1.

### 6.2.3.1. Récupération de l'hydrogène contenu dans le ciel gazeux

Afin d'améliorer le rendement de la réaction, le procédé peut comprendre une sous-étape consistant à récupérer l'hydrogène contenu dans ce ciel gazeux.

Une première solution pour récupérer l'hydrogène contenu dans le ciel gazeux 17 consiste à injecter de l'eau pure dans l'enceinte réactionnelle à partir du système d'approvisionnement 3. A cet effet, la pompe de transfert 36 est activée et la vanne de sortie 35b est basculée dans un état passant pour permettre le transfert d'eau pure à haute pression depuis la citerne 32 vers la chambre de décantation C2 de l'enceinte réactionnelle 1. Ceci induit le déplacement du ciel gazeux vers le système de collecte de gaz 4 pour la récupération de l'hydrogène contenu dans celui-ci.

Une deuxième solution pour récupérer une partie de l'hydrogène contenu dans le ciel gazeux 17 consiste à :
- basculer la vanne d'isolement 48 dans un état bloqué pour remplacer le réservoir de stockage dans lequel l'hydrogène produit a été stocké par un récipient de stockage vide, et à
- basculer la vanne d'isolement 48 dans un été passant une fois le récipient de stockage vide connecté.

Cette deuxième solution permet de récupérer environ 75% de l'hydrogène contenu dans le ciel gazeux 17.

### 6.2.3.2. Remise en état de fonctionnement

Une sous-étape de remise en état de fonctionnement de l'installation peut également être mise en oeuvre.

Cette sous-étape de remise en état comprend
- le refroidissement et la mise à pression atmosphérique de l'installation,
- la purge de l'installation pour vider la solution aqueuse alcaline contenue dans l'enceinte réactionnelle,
- le rinçage des sous-produits de réaction 12,
- la récupération des sous-produits de réaction 12.

Pour le refroidissement et la mise à pression atmosphérique de l'installation, la vanne d'entrée 35a du système d'approvisionnement 3 est commutée dans un état permettant la circulation d'eau pure entre le système de collecte 4 et le système d'approvisionnement 3. Ainsi, à compter de cette commutation de la vanne d'entrée 35a, toute la vapeur d'eau condensée (formant l'eau pure) par l'échangeur thermique est acheminée vers la citerne 32. Par ailleurs, la vanne de dégazage 37 est ouverte progressivement pour permettre aux gaz de s'échapper à travers la citerne 32 qui est à pression atmosphérique. Ceci permet de diminuer la pression à l'intérieur de l'enceinte réactionnelle d'une part et du système de collecte d'autre part. Après une première perte de pression, la solution réactionnelle commence à bouillir en évaporant activement une partie d'eau et en baissant la température. Les vapeurs d'eau sont condensées dans l'échangeur thermique 41 du système de collecte 4 et le condensat ainsi obtenu est réintroduit dans la cuve 32 du système d'approvisionnement 3.

Pour la purge de l'installation l'unité de contrôle active la première vanne de circulation 25a pour la faire basculer dans un état passant afin de permettre le passage de la solution aqueuse alcaline depuis l'enceinte réactionnelle 1 vers la cuve 22. La circulation de la solution aqueuse alcaline entre les chambres C1, C2 et la cuve 22 peut être assurée par gravité ou obtenue par une action motorisée (à l'aide d'une pompe). La solution aqueuse alcaline ainsi purgée peut être réutilisée ultérieurement pour la mise en oeuvre d'une nouvelle réaction de corrosion. Ceci permet de limiter la quantité de soude utilisée pour la génération d'hydrogène.

Pour le rinçage des sous-produits, de l'eau pure issue du système d'approvisionnement 3 peut être déversée dans la chambre de décantation C1. Ceci permet de débarrasser les sous-produits 12 des éventuels dépôts de soude présents à leurs surfaces. L'eau de rinçage est récupérée dans la cuve 22 du système d'alimentation 2. Là encore, ce rinçage permet de limiter la quantité de soude utilisée pour la génération d'hydrogène (en plus de nettoyer les sous-produits de réaction).

La partie basse de la chambre de décantation est ensuite détachée pour évacuer les sous-produits 12 solides de la réaction.

### 6.3. Conclusions

L'installation décrite précédemment permet de générer de l'hydrogène en :
- maximisant la quantité consommée de matériau oxydable,
- minimisant les quantités d'eau et de soude consommées.

Cette installation permet en outre la génération d'hydrogène à haute pression (jusqu'à 350bars).

Le lecteur aura compris que de nombreuses modifications peuvent être apportées à l'invention décrite précédemment sans sortir matériellement des nouveaux enseignements et des avantages décrits ici.

## Revendications

1. Installation pour la production de dihydrogène comprenant :
- une enceinte réactionnelle (1) destinée à contenir un matériau oxydable,
- un système d'alimentation (2) en solution alcaline (21) raccordé fluidiquement à l'enceinte réactionnelle (1),
- un système d'approvisionnement (3) en eau pure (31) raccordé fluidiquement à l'enceinte réactionnelle (1),
- un système de collecte (4) du dihydrogène en aval de l'enceinte réactionnel (1), le système de collecte (4) étant raccordé fluidiquement :
∘ d'une part à l'enceinte réactionnelle (1), et
∘ d'autre part au système d'approvisionnement (3),
et comprenant une borne pour connecter un récipient de stockage (5) à l'installation, ledit récipient (5) étant configuré pour stocker le dihydrogène produit à une haute pression désirée supérieure ou égale à 60 bars, préférentiellement supérieure à 150 bars, encore plus préférentiellement supérieure à 250 bars, notamment de l'ordre de 350bars,
**caractérisé en ce que** l'enceinte réactionnelle (1) comprend :
- une chambre de réaction (C1) dans laquelle une réaction de corrosion du matériau oxydable par la solution alcaline est réalisée, ladite réaction produisant un gaz contenant le dihydrogène, et un fluide réactionnel composé d'un mélange de solution alcaline et de matériau oxydé,
- une chambre de décantation (C2) dans laquelle une réaction de précipitation du matériau oxydé contenu dans le fluide réactionnel est réalisée, et
- une unité de brassage raccordée fluidiquement à la chambre de réaction (C1) et à la chambre de décantation (C2) pour assurer la circulation du fluide réactionnel entre la chambre de réaction (C1) et la chambre de décantation (C2), la vitesse de circulation du fluide réactionnel dans la chambre de réaction (C1) étant supérieure à la vitesse de circulation du fluide réactionnel dans la chambre de décantation (C2).

2. Installation selon la revendication 1, ***dans laquelle*** la puissance de la pompe (P1), les dimensions de la chambre de réaction (C1) et les dimensions de la chambre de décantation (C2) sont configurées de sorte que :
- la vitesse de circulation du fluide réactionnel est supérieure ou égale à 5 cm/s dans la chambre de réaction (C1), préférentiellement supérieure ou égale à 6 cm/s, et
- la vitesse de circulation du fluide réactionnel est inférieure ou égale à 4 cm/s dans la chambre de décantation (C2), préférentiellement inférieure à 3cm/s.

3. Installation selon l'une quelconque des revendications 1 ou 2, ***dans laquelle*** la chambre de décantation (C2) comprend un système de séparation à cyclone.

4. Installation selon l'une quelconque des revendications 1 à 3, ***dans laquelle*** le système de collecte (4) est raccordé fluidiquement à la chambre de réaction (C1) de l'enceinte réactionnelle (1) pour recevoir le gaz produit par la réaction de corrosion du matériau oxydable, ledit système de collecte (4) comprenant un échangeur thermique (41) pour condenser la vapeur d'eau contenue dans lesdits gaz et former une eau pure condensée.

5. Installation selon la revendication 4, ***dans laquelle*** le système de collecte (4) comprend en outre un capteur de liquide (43) et une vanne de sécurité (44) montés entre l'enceinte réactionnelle (1) et l'échangeur thermique (41), la vanne de sécurité (44) étant :
∘ dans un état passant lorsqu'aucun liquide n'est détecté par le capteur de liquide (43) de sorte à autoriser la circulation des gaz entre l'enceinte réactionnelle (1) et le système de collecte (4),
∘ dans un état bloqué lorsqu'un liquide est détecté par le capteur de liquide (43) de sorte à empêcher la circulation des gaz depuis l'enceinte réactionnelle (1) vers l'échangeur thermique (41).

6. Installation selon l'une quelconque des revendications 4 ou 5, ***dans laquelle*** le système de collecte (4) comprend en outre un épurateur (46) monté en aval de l'échangeur thermique (41) pour traiter les gaz issus de l'échangeur thermique (41).

7. Installation selon l'une quelconque des revendications 4 à 6, ***dans laquelle*** le système de collecte (4) comprend en outre un déverseur (47) en aval de l'échangeur thermique (41), ledit déverseur autorisant la circulation des gaz vers le récipient de stockage (5) lorsque la pression dans le système de collecte est supérieure ou égale à la haute pression désirée.

8. Installation selon l'une quelconque des revendications 4 à 7, ***dans laquelle*** le système de collecte (4) comprend une vanne d'isolement (48), ladite vanne d'isolement étant :
∘ dans un état bloqué :
▪ lorsque le récipient de stockage (5) doit être remplacé, ou
▪ lors d'une phase de démarrage de l'installation dans laquelle l'enceinte réactionnelle (1) est remplie avec la solution alcaline (21),
∘ dans un état passant sinon.

9. Installation selon l'une quelconque des revendications 1 à 8, ***dans laquelle*** le système d'approvisionnement (3) en eau pure comprend une citerne (32) contenant de l'eau pure, et une pompe de transfert (46) entre ladite citerne et l'enceinte réactionnelle (1), ladite pompe de transfert (46) étant configurée pour :
∘ transférer de l'eau pure depuis la citerne (32) vers l'enceinte réactionnelle (1) lors d'une phase de récupération de dihydrogène contenu dans une poche de gaz située dans l'enceinte réactionnelle (1), entre la solution alcaline et le système de collecte de gaz (4),
∘ transférer ladite eau pure à une pression supérieure ou égale à la haute pression désirée.

10. Installation selon la revendication 9, ***dans laquelle*** la citerne (32) est à pression atmosphérique, le système d'approvisionnement (3) comprenant une vanne de dégazage (37), ladite vanne de dégazage (37) étant :
∘ dans un état bloqué durant la réaction de corrosion du matériau oxydable par la solution alcaline, ladite réaction produisant un gaz contenant le dihydrogène,
∘ dans un état passant lorsque la réaction de corrosion est terminée, pour diminuer la pression à l'intérieur de l'enceinte réactionnelle (1) et à l'intérieur du système de collecte (4).

11. Installation selon la revendication 4 prise en combinaison de l'une quelconque des revendications 9 ou 10, *dans laquelle* le système d'approvisionnement (3) comprend en outre :
∘ une vanne d'entrée (35a) entre le système de collecte (4) et la citerne (32), ladite vanne d'entrée (35a) étant :
▪ dans un état bloqué durant la réaction de corrosion du matériau oxydable par la solution alcaline, de sorte que l'eau pure condensée issue de l'échangeur thermique (41) est réacheminé vers l'enceinte réactionnelle (1),
▪ dans un état passant lorsque la réaction de corrosion est terminée, pour autoriser la circulation de l'eau pure condensée issue de l'échangeur thermique (41), depuis le système de collecte (4) vers la citerne (32), et
∘ une vanne de sortie (35b) entre la citerne (32) et l'enceinte réactionnelle (1), ladite vanne de sortie (35b) étant dans un état passant lorsque la réaction de corrosion est terminée, pour rincer des sous-produits de la réaction de corrosion.
